# EUROPEAN PATENT APPLICATION

(11) **EP 4 391 195 A1**
(43) Date of publication of application: **26.06.2024**
(21) Application number: 23210466.1
(22) Date of filing: 16.11.2023
(51) Int. Cl.: H01M 50/489, H01M 50/491, H01M 50/414, H01M 50/417, H01M 50/446, H01M 50/449, H01M 50/457, H01M 10/0525

(54) **SEPARATOR HAVING EXCELLENT WITHSTAND VOLTAGE PROPERTIES AND SECONDARY BATTERY INCLUDING THE SEPARATOR**

(30) Priority: 17.11.2022 KR 20220154448
(71) Applicant: SK On Co., Ltd., Seoul 03161 (KR)
(72) Inventor: JO, Yun Kyung, 34124 Daejeon (KR); KIM, Jeong Han, 34124 Daejeon (KR); KIM, Whee Sung, 34124 Daejeon (KR); YEON, Dae Yong, 34124 Daejeon (KR)
(74) Representative: Stolmár & Partner Patentanwälte PartG mbB

(57) **Abstract**

A separator for a secondary battery includes a porous polymer material; and a coating layer including an inorganic material and a binder on one or both surfaces of the porous polymer material, wherein a ratio of average pore size of the separator to a maximum pore size, measured by a bubble point method, is 0.5 to 0.99, and surface roughness Rz is 2.5 or less, and the separator may have excellent withstand voltage characteristics as a thin film and may exhibit suitable evaluation characteristics in a Hi-pot test performed during a battery assembly process.

## Description

### TECHNICAL FIELD

The technology and implementations disclosed in this patent document generally relate to a separator having excellent withstand voltage properties and a secondary battery including the separator.

### BACKGROUND

Recently, demand for high capacity and high energy density in a lithium ion secondary battery has increased.

The separator disposed between an anode and a cathode may correspond to a spacing distance between the cathode and the anode in the structure of a battery, and accordingly, to meet the requirements for high capacity and high energy density as described above, it may be necessary to reduce the spacing distance between the anode and cathode by reducing the thickness of the separator.

Generally, in the process of assembling a lithium-ion secondary battery, a high potential test (Hi-pot test) for identifying abnormalities in an insulating layer by applying high-voltage current may be performed to detect a pin-hole of the separator and detecting impurities. When there are pinholes or impurities in the separator, a low voltage phenomenon in which a voltage may be lowered below a self-discharge rate may occur. A battery exhibiting the low voltage phenomenon may be treated as defective.

Even when there are no pinholes or impurities in the separator, when the separator is locally damaged by high voltage applied from an external entity, a leakage current may occur in the damaged portion of the separator, which may result in a defect in the Hi-pot test. When a battery is determined as being defective in the Hi-pot test, assembly processability of the battery may decrease, and the possibility of low-voltage defects occurring in the battery having gone through the entire processes of manufacturing the battery may increase. Thus, to ensure stable battery assembly and battery safety, it may be advantageous to perform a Hi-pot test.

In performing the Hi-pot test, under the assumption that there are no foreign materials in a separator, the separator may act as a dielectric barrier. Therefore, the reduction in the thickness of the separator may indicate that the thickness of the dielectric barrier may decrease, and accordingly, as the spacing distance between an anode and a cathode decreases, the discharge start voltage may be reduced. Ultimately, it may be highly likely that the battery may be determined as "fail" in the Hi-pot test under high voltage.

To improve the safety of separator, a separator in which an inorganic coating layer is coated on at least one surface of a polyolefin porous substrate such as polyethylene or polypropylene has been used. In a separator having an inorganic coating layer as described above, a pore size of the polyolefin porous substrate may be generally smaller than a pore size of the inorganic coating layer formed on the surface. Accordingly, in a separator with an inorganic coating layer, the average pore size and pore size distribution characteristics may be determined by the pore size distribution and the pore size of the polyolefin porous substrate, rather than the inorganic coating layer.

Korean Laid-open Patent Application Publication No. 2015-0070979 is to improve the structural stability of a composite separator with a porous coating layer and to provide a separator having increased air permeability and ionic conductivity, and discloses a separator in which the curvature of a polymer film is limited to a predetermined range. The above cited document uses a method of calculating the curvature of the separator through an ionic conductivity value, but the curvature of the separator may be greatly affected by external factors and the value may change.

### SUMMARY

The disclosed technology is to provide a thin-film separator which may demonstrate an appropriate level of evaluation characteristics in a Hi-pot test performed during the battery assembly process.

The embodiment of the disclosed technology is to provide a separator which may improve withstand voltage characteristics of the separator by controlling a pore structure of a porous substrate and flatness of a coating layer.

In some embodiments, a separator for a secondary battery includes a porous material; and a coating layer including an inorganic material and a binder on one or both surfaces of the porous material, wherein a ratio of average pore size of the separator to a maximum pore size, measured by a bubble point method, is 0.5 to 0.99, and surface roughness Rz is 2.5 or less.

A ratio of an average pore size to a maximum pore size may be 0.5 to 0.65.

The separator may have a maximum pore size of 80 to 100 nm and an average pore size of 40 to 60 nm.

The surface roughness Rz may be 1.0 to 2.0.

The separator may have an insulation breakdown voltage of 0.145KV/µm or more per unit thickness.

The separator may have an insulation breakdown voltage of 1.6KV or more.

The inorganic material may be at least one material selected from a group consisting of aluminum hydroxide (Al(OH)₃), magnesium hydroxide (Mg(OH)₂), aluminum oxide (Al₂O₃), magnesium oxide (MgO), calcium oxide (CaO), barium sulfate (BaSO₄), Boehmite, titanium dioxide (TiO₂), silica (SiO₂) and clay.

The inorganic material may have an average particle diameter of 40 nm to 1.6 µm.

The binder may be at least one or more materials selected from a group consisting of polymethylmethacrylate, polybutylacrylate, polyacrylonitrile, polyvinylpyrrolidone, polyvinyl acetate, poly-co-vinyl acetate, polyethylene oxide.

The separator may have a thickness of 10 to 17 µm.

The separator may have air permeability of 50 to 200 sec/100cc.

In some embodiments, a lithium-ion secondary battery includes an anode, a cathode, and a separator disposed between the anode and cathode, wherein the separator is a separator for a secondary battery as described above.

### DETAILED DESCRIPTION

Features of the disclosed technology disclosed in this patent document are illustrated in embodiments with reference to the accompanying drawings.

The disclosed technology is to provide a separator having improved withstand voltage characteristics by controlling the pore size of the separator and flatness of the surface of a coating layer, and a secondary battery including the separator. Hereinafter, the example embodiment will be described in greater detail.

In the example embodiments, a separator for a secondary battery may include a porous polymer material and an inorganic coating layer on at least one surface of the porous polymer material.

In the separator in the example embodiments, the porous polymer material may specifically be a porous polymer film material.

The porous polymer material may be a material commonly used as a separator for a lithium-ion secondary battery. For example, the porous polymer material may be a porous polymer material formed of polyolefin such as polyethylene or polypropylene. In this case, polyolefin porous polymer material may be formed of at least one or two or more types of copolymers selected from a group consisting of polyethylenes such as high-density polyethylene, linear low-density polyethylene, low-density polyethylene, ultra-high molecular weight polyethylene, polypropylene, polybutylene and polypentene, but is not limited thereto.

Also, the porous polymer material may be manufactured using various polymers such as polyester in addition to polyolefin described above. Also, the porous polymer material may be formed in a structure in which two or more layers of materials are stacked, and each layer may be formed of the above-described polymers such as polyolefin or polyester alone or a mixture of two or more thereof.

Also, the porous polymer material may be formed using polyethyleneterephthalate, polybutyleneterephthalate, polyester, polyacetal, polyamide, polycarbonate, polyimide, polyetheretherketone, polyethersulfone, polyphenyleneoxide, polyphenylenesulfide, polyethylenenaphthalene individually or a mixture thereof, other than polyolefin materials mentioned above.

A thickness of the porous polymer material is not limited to any particular example, and may be 4 to 16 µm, specifically 5 to 15 µm. When the thickness of the material is less than 4 µm, the battery assembly process may be unstable as the separator may be frequently broken by components such as equipment jigs or fixing grips during a battery assembly process. When the thickness of the material exceeds 16 µm, the material may not be suitable for manufacturing high capacity and high energy density batteries.

In the porous polymer material, a ratio of average pore size to a maximum pore size present in the material may be 0.5 or more. When the ratio of the average pore size to the maximum pore size is less than 0.5, the pore size may not be uniform, and accordingly, it may be highly likely that leakage current may occur in a portion under high voltage, and withstand voltage characteristics may be reduced. For example, the ratio of the average pore size to the maximum pore size may be 0.5 to 0.99, and more specifically, 0.50 to 0.65, or 0.51 to 0.63.

The average pore size present in the porous polymer material may be 40 to 80 nm, for example, 40 to 60 nm. When the average pore size is less than 40 nm, it may be difficult to implement the discharge capacity maintenance rate (cycle characteristics) during repeated charging and discharging to meet a required level, and when the average size exceeds 80 nm, the characteristics of the Hi-pot test may not be satisfied. More specifically, the average pore size of the porous polymer material may be 45 to 55.5 nm.

The maximum pore size present in the porous polymer material may be 80 to 120 nm, for example, 80 to 100 nm. It may not be easy to manufacture a separator having a maximum pore size less than 80 nm, and when the maximum pore size exceeds 120 nm, Hi-pot test characteristics may not be satisfied. More specifically, the maximum pore size of the porous polymer material may be 82.4 to 96.9 nm.

The porosity of the porous polymer material is not limited to any particular example, and may be 10 to 95%, and may have a shutdown characteristic at a temperature of, for example, 80 to 130°C.

The separator provided in the example embodiments may include an inorganic coating layer on one or both surfaces of the porous polymer material. The inorganic coating layer may be provided to assure heat resistance of the separator and to improve safety, and may be formed by coating a mixture of an excessive amount of inorganic material particles and a binder polymer.

The inorganic material particles included to form the inorganic coating layer may be at least one material selected from a group consisting of, for example, aluminum hydroxide (Al(OH)₃), magnesium hydroxide (Mg(OH)₂), aluminum oxide (Al₂O₃), magnesium oxide (MgO), calcium oxide (CaO), barium sulfate (BaSO₄), Boehmite, titanium dioxide (TiO₂), silica (SiO₂) and clay.

The inorganic material particles may have an average size of particles of 40 nm to 1.6 µm. When the average size of particles of the inorganic material is less than 40 nm, slurry stability may degrade when preparing slurry for coating, and when the average size exceeds 1.6 µm, it may be difficult to implement a thickness of the coating layer for a separator for high capacity and high energy density battery, for example, the thickness of the coating layer of 2 µm level.

The binder used in forming the inorganic coating layer may be, for example, at least one or more materials selected from a group consisting of polymethylmethacrylate, polybutylacrylate, polyacrylonitrile, polyvinylpyrrolidone, polyvinylacetate, poly-co-vinyl acetate, polyethylene oxide, and one of the materials may be selected and used, and a combination of two or more of the materials may be used.

The inorganic coating layer may include the binder in a content of 3 to 50 by weight%. When the binder content is less than 3 weight%, adhesion between inorganic material particles and adhesion between inorganic material particles and the porous polymer material may decrease, and when the content exceeds 50 weight%, resistance may increase due to the excessive content of binder.

The separator according to the example embodiments may further include other additives in addition to the inorganic material particles and the binder as components of the inorganic coating layer.

In the separator in which an inorganic coating layer is formed on a porous polymer material, pore characteristics of the separator may be determined by pore characteristics of the porous polymer material. In other words, as the pore size of the porous polymer material is smaller than the pore size of the inorganic coating layer formed on the surface thereof, the pore size and the distribution characteristics of pore size of the separator may be determined by the distribution and pore size of the porous polymer material.

Therefore, in the separator, a ratio of the average pore size to the maximum pore size may be 0.5 to 0.99, and more specifically, 0.5 to 0.65. In this case, the maximum pore size of the separator may be 80 to 100 nm, and the average pore size may be 40 to 60 nm.

In the example embodiments, in the separator having the inorganic coating layer on the surface of a porous polymer material, when flatness of the inorganic coating layer is within a predetermined range, along with the characteristics of pores of the porous polymer material, that is, the ratio of the average pore size to the maximum pore size, the withstand voltage characteristics of the separator may be improved.

In the separator provided in the example embodiments, surface roughness Rz of the inorganic coating layer may have a value of 2.5 µm or less. When the surface roughness Rz of the separator is small, and the separators are stacked, the gap between the separators may be uniform, which may improve the withstand voltage characteristics of the separator. However, when the value of the surface roughness Rz exceeds 2.5, a gap between the separators may become uneven, such that the discharge start voltage may be lowered during a Hi-pot test. Specifically, the separator may have surface roughness of 1.0 to 2.0, and more specifically, 1.2 to 1.9.

Surface roughness Rz may be determined by surface uniformity of coating of an outermost layer of the separator, and may be controlled by the size of particles of the inorganic material of the coating layer, uniformity of particle size distribution, and uniform dispersion of coating layer slurry.

As described above, limiting the pore size distribution and surface roughness characteristics of the separator to a predetermined range, withstand voltage characteristics of the separator may be improved. Also, even when the separator is formed as a thin film, the separator may have excellent withstand voltage characteristics, also excellent overcharge performance within the battery and excellent capacity maintenance characteristics after cycling, such that the separator may be suitable for implementing high capacity and high energy density of the battery. Specifically, the separator may be a thin film having a thickness of 10 to 17 µm.

The separator according to the example embodiments may have an insulation breakdown voltage per unit thickness of 0.145KV/µm or more, and the insulation breakdown voltage of the entire separator may be 1.6KV or more.

Also, the separator may have a permeability value of 50 to 200 sec/100cc. When air permeability is less than 50 sec/100cc, it may be difficult to assemble the battery smoothly due to accompanying low mechanical strength characteristics, and when the permeability is more than 200 sec/100cc, it may be difficult to implement the cycle characteristics of the battery to which the separator in the example embodiments is applied.

By controlling the pore size of the separator and flatness of the coating layer surface as above, the separator having excellent withstand voltage characteristics may be provided, and by applying the separator to a battery having high density and high capacity characteristics, performance of the battery may be improved. Also, due to excellent withstand voltage characteristics, low-voltage defects in which the discharge start voltage decreases may be prevented, such that the battery may pass the Hi-pot test.

### Embodiment

Hereinafter, the example embodiments will be described in greater detail with reference to specific embodiments. The embodiments are merely examples, and the example embodiments are not limited thereto.

### [Measurement method]

**Pore** size: Under ASTM F316-03, the size was measured using the bubble point method using a porometer (CFP-1500-AFL from PMI) and Galwick liquid (surface tension: 15.9 dyne/cm) provided by PMI. Here, the pore size was measured by measuring a maximum pore size and an average pore size.

**Separator surface roughness:** roughness was measured using a portable surface roughness meter (model name SJ-310) manufactured by Mitutoyo, product number 178-570-02K. The average peak to valley (Rz) is the average value of total height of profile (Rt; a difference in heights between the highest peak and lowest valley within the measurement length) greater than lengths of at least 5 samples.

**Insulation breakdown voltage (BDV):** BDV was measured using a DC method and a current limit of 5.0mA under lamp on conditions, and by dividing the measured BDV by the thickness of the separator, the insulation breakdown voltage per unit thickness was obtained.

**Hi-pot test during battery assembly:** the separator was exposed to a voltage of 200V before injecting electrolyte into an electrode assembly including an anode, a cathode, and a separator stacked between the anode and the cathode, and when a resistance value of 0.5Mohm or less was exhibited, the sample was determined as "fail."

**Thermal reduction rate:** The rate of change was examined by comparing the size of the separator after being stored in a chamber at a temperature of 130°C for one hour with the size of the separator before entering the chamber.

**Air permeability:** Air permeability was measured using EG01-55R-1MR equipment of Asahi Seiki. Air permeability was measured for five or more samples and the average value was determined as a representative value.

**Overcharge:** A fully charged battery in an insulated chamber was charged for 2.5 hours to a voltage of 5.0V under a current condition of 1C, and whether ignition occurred was determined. When ignition occurred, the sample was determined as "Fail," and when ignition does not occur, the sample was determined as "Pass."

**Discharge capacity maintenance rate at 600 cycles:** Charging and discharging were repeated at a charge level ranging from 2% to 96% and discharge capacity at 600 times was divided by the capacity at 1 time discharging.

### Embodiments 1 to 3 and comparative examples 1 to 4

Seven separators in which an inorganic coating layer formed on both surfaces of polyethylene porous material were prepared, and air permeability, thermal reduction rate, pore size, surface roughness and insulation breakdown voltage were measured for each separator, and the results are listed in Table 1 below.

Also, a battery was manufactured using the same anode and cathode other than using the different separators. A Hi-pot test was performed during battery assembly whether the separator passed the test was evaluated, and the results are listed in Table 1 below.

Also, an overcharge test and evaluation of discharge capacity maintenance rate were performed on the manufactured battery, and the results are listed in Table 1.

**[Table 1]**

| | Embodiment | | | Comparative example | | | |
|---|---|---|---|---|---|---|---|
| | 1 | 2 | 3 | 1 | 2 | 3 | 4 |
| Thickness µm) | 11.0 | 10.5 | 12.5 | 11.0 | 10.5 | 13.0 | 13.0 |
| Air permeability (sec/100ce) | 153 | 150 | 90 | 161 | 128 | 164 | 149 |
| Thermal reduction rate (130°C 1hr, %) | 6 | 3 | 5 | 4 | 5 | 4.5 | 2.0 |
| Maximum pore size (nm) | 88.4 | 82.4 | 96.9 | 96.5 | 106.3 | 97 | 97.1 |
| Average pore size (nm) | 55.5 | 45 | 49.8 | 43.7 | 44.9 | 42.3 | 51.5 |
| Average pore size/maximum pore size | 0.63 | 0.55 | 0.51 | 0.45 | 0.42 | 0.44 | 0.53 |
| Surface roughness Rz | 1.90 | 1.20 | 1.90 | 1.81 | 1.67 | 2.45 | 2.74 |
| Insulation breakdown voltage BDV (KV) | 1.98 | 1.84 | 1.9 | 1.5 | 0.83 | 1.54 | 1.51 |
| BDV per unit thickness (KV/µm) | 0.19 | 0.18 | 0.15 | 0.14 | 0.08 | 0.12 | 0.12 |
| Hi-Pot test during battery assembly | Pass | Pass | Pass | Fail | Fail | Fail | Fail |
| Overcharge (1C/5.0V) | Pass | Pass | Pass | Fail | Fail | Fail | Pass |
| Discharge capacity maintenance rate at 600 cycles (%) | 85 | 83 | 88 | 83 | 84 | 88 | 78 |

As indicated in Table 1, each of the separators in embodiments 1 to 3 and comparative examples 1 to 4 was a thin film having a thickness of 10.5 to 13 µm, and had air permeability of 90 to 164sec/100cc and a thermal reduction rate of 2 to 6%, and the separator had similar characteristics. However, the separators in embodiments 1 to 3 had a maximum pore size of 82.4 to 96.9 nm and an average pore size of 45 to 55.5 nm, a ratio of an average pore size to a maximum pore size was 0.51 to 0.63, surface roughness Rz was 1.20 to 1.20, the minimum value of breakdown insulation voltage was 1.84KV, and the insulation breakdown voltage per unit thickness was more than 0.15KV/µm, and passed both the Hi-pot test and the overcharge test.

The separators of comparative example 1 to 3 had a maximum pore size of 96.5 to 106.3 nm and an average pore size of 42.3 to 44.9 nm, and the ratio of the average pore size to the maximum pore size was 0.42 to 0.45. As such, in comparative examples 1 to 3, the ratio of the average pore size to the maximum pore size was less than 0.5, and surface roughness Rz was 1.81, 1.67 and 2.45, which falls within the range limited in the embodiments, but the insulation breakdown voltage was low at less than 1.54 KV, the insulation breakdown voltage per unit thickness was low at less than 0.14KV/µm, and the separators failed both the Hi-pot test and the overcharge test.

The separator in comparative example 4 had a maximum pore size of 97.1 nm and an average pore size of 51.5 nm, and the ratio of the average pore size to the maximum pore size was 0.53. The separator in comparative example 4 exhibited that the ratio of the average pore size to the maximum pore size was greater than 0.5. However, surface roughness Rz was 2.74, which does not fall within the range limited in the embodiments, such that the insulation breakdown voltage was low, 1.51 KV or less, the insulation breakdown voltage per unit thickness was low, 0.12KV/µm, and the separator did not pass the Hi-pot test.

According to the above results, the separator including an inorganic coating layer on the surface of the porous polymer material had the ratio of the average pore size to the maximum pore size within the range of 0.5 to 0.99, and when the surface roughness of the separator surface, that is, the inorganic coating layer, was 2.5 µm or less, the withstand voltage characteristics may be improved, the separator may not exhibit any low-voltage defects and may pass the Hi-pot test during battery assembly.

According to the aforementioned example embodiments, by controlling the size of the pores of the separator and flatness of the surface of the coating layer, a separator having improved withstand voltage characteristics may be provided.

Also, by including a separator according to the embodiments, the battery may pass the Hi-pot test performed during the battery assembly process, thereby improving processability of the battery assembly.

The separator in which the size of the pores of the separator and flatness of the surface of the coating layer may be controlled, and air permeability characteristics and a thermal reduction rate suitable for battery design may be used, thereby improving the quality of the battery.

Only specific examples of implementations of certain embodiments are described. Variations, improvements and enhancements of the disclosed embodiments and other embodiments may be made with respect to the disclosure of this patent document.

## Claims

1. A separator for a secondary battery, the separator comprising:
a porous polymer material; and a coating layer including an inorganic material and a binder on one or both surfaces of the porous polymer material,
wherein a ratio of average pore size of the separator to a maximum pore size, measured by a bubble point method, is 0.5 µm to 0.99 µm, and surface roughness Rz is 2.5 µm or less.

2. The separator of claim 1, wherein a ratio of an average pore size to a maximum pore size is 0.5 to 0.65.

3. The separator of claim 1 or claim 2, wherein the separator has a maximum pore size of 80 to 100 nm and an average pore size of 40 to 60 nm.

4. The separator of any one of claims 1 to 3, wherein the surface roughness Rz is 1.0 to 2.0 µm.

5. The separator of any one of claims 1 to 4, wherein the separator has an insulation breakdown voltage of 0.145KV/µm or more per unit thickness.

6. The separator of any one of claims 1 to 5, wherein the separator has an insulation breakdown voltage of 1.6KV or more.

7. The separator of any one of claims 1 to 6, wherein the inorganic material is at least one material selected from a group consisting of aluminum hydroxide (Al(OH)₃), magnesium hydroxide (Mg(OH)₂), aluminum oxide (Al₂O₃), magnesium oxide (MgO), calcium oxide (CaO), barium sulfate (BaSO₄), Boehmite, titanium dioxide (TiO₂), silica (SiO₂) and clay.

8. The separator of any one of claims 1 to 7, wherein the inorganic material has an average particle diameter of 40 nm to 1.6 µm.

9. The separator of any one of claims 1 to 8, wherein the binder is at least one or more materials selected from a group consisting of polymethylmethacrylate, polybutylacrylate, polyacrylonitrile, polyvinylpyrrolidone, polyvinylacetate, Ethylene Vinyl Acetate copolymer, polyethylene oxide.

10. The separator of any one of claims 1 to 9, wherein the separator has a thickness of 10 to 17 µm.

11. The separator of any one of claims 1 to 10, wherein the separator has air permeability of 50 to 200 sec/100cc.

12. A lithium-ion secondary battery, comprising:
an anode, a cathode, and a separator disposed between the anode and cathode,
wherein the separator is a separator for a secondary battery of any one of claims 1 to 11.
